# EUROPÄISCHE PATENTANMELDUNG

(11) **EP 1 086 970 A2**
(43) Veröffentlichungstag der Anmeldung: **28.03.2001**
(21) Anmeldenummer: 00118219.5
(22) Anmeldetag: 01.09.2000
(51) Int. Cl.: C08G 18/78, G11B 5/702, C08L 75/04

(54) **Füllstoffhaltige Bindemittelzusammensetzung, Verfahren zu deren Herstellung und deren Verwendung**

(30) Priorität: 22.09.1999 DE 19945401
(71) Anmelder: EMTEC Magnetics GmbH, 67059 Ludwigshafen (DE)
(72) Erfinder: Raether, Benedikt, Dr., 67117 Limburgerhof (DE); Hees, Ulrike, Dr., 68167 Mannheim (DE); Kress, Ria, Dr., 67063 Ludwigshafen (DE); Kohl, Albert, 67229 Laumersheim (DE); Bradshaw, Richard, Dr., Tucson, Arizona 85748 (US)
(74) Vertreter: Honeit, Ute

(57) **Zusammenfassung**

Die Erfindung betrifft eine Bindemittelzusammensetzung, mindestens enthaltend einen anorganischen Füllstoff und ein thermoplastisches Blockcopolyurethan mit jeweils mindestens einem Weichsegment (A) und mindestens einem Hartsegment (B), wobei in mindestens einem Hartsegment (B) ein Strukturelement gemäß der allgemeinen Formel I 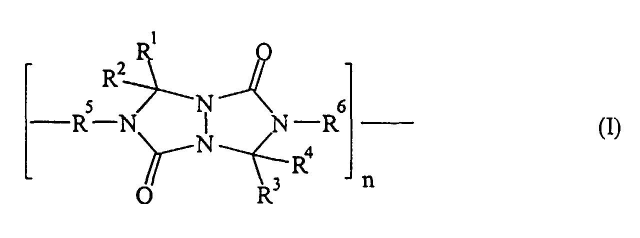 enthalten ist, ein Verfahren zur Herstellung einer solchen Bindemittelzusammensetzung sowie deren Verwendung, insbesondere zur Herstellung von magnetischen Aufzeichnungsmedien.

## Beschreibung

Die Erfindung betrifft eine Bindemittelzusammensetzung, mindestens enthaltend einen anorganischen Füllstoff und ein thermoplastisches Blockcopolyurethan mit jeweils mindestens einem Weichsegment (A) und mindestens einem Hartsegment (B), wobei in mindestens einem Hartsegment (B) ein Strukturelement gemäß der allgemeinen Formel I 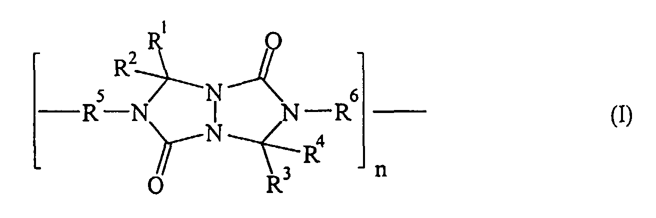 enthalten ist, ein Verfahren zur Herstellung einer solchen Bindemittelzusammensetzung sowie deren Verwendung, insbesondere zur Herstellung von magnetischen Aufzeichnungsmedien.

Als Bindemittel in magnetischen Aufzeichnungsmedien eignen sich bekanntermaßen verschiedene Stoffgruppen. Als besonders vorteilhaft haben sich bislang die Polyurethane erwiesen, die vor allem die Elastizität der magnetischen Aufzeichnungsmedien bzw. von Beschichtungen solcher magnetischen Aufzeichnungsmedien deutlich verbessern. Als nachteilig hat sich bei den Polyurethanen jedoch häufig deren geringe Härte und Abriebfestigkeit erwiesen.

Dieses Problem wird beispielsweise in der deutschen Patentanmeldung mit dem Aktenzeichen 19626824.9 beschrieben. Die gemäß dieser Druckschrift erhältlichen Polyurethane weisen zwar in bezug auf Härte und Abriebfestigkeit deutlich verbesserte Werte auf, die Aufzeichnungsstabilität konnte jedoch unter bestimmten Voraussetzungen, beispielsweise bei erhöhter Lagerungs- oder Betriebstemperatur nachlassen.

Um diesen Probleme zu begegnen, wurden die in magnetischen Aufzeichnungsmedien eingesetzten Polyurethane beispielsweise mit ionischen Ankergruppen ausgestattet. So beschreibt die EP-A 0 681 289 ionische Phosphonate, die zur Verwendung in Bindemitteln für magnetische Aufzeichnungsmedien geeignet sind. Die Druckschrift beschreibt Polyurethane, die solche ionischen Phosphonate enthalten und deren Verwendung in magnetischen Aufzeichnungsmedien. Nachteilig wirkt sich bei solchen ionische Ankergruppen tragenden Polyurethanen allerdings aus, daß sie in der Regel eine erhöhte Wasseraufnahme zeigen, insbesondere bei erhöhter Temperatur und erhöhter Luftfeuchtigkeit. Mit zunehmender Wasseraufnahme wird jedoch die Glasübergangstemperatur des magnetischen Aufzeichnungsmediums erniedrigt, was beim Einsatz solcher Polyurethane in magnetischen Aufzeichnungsmedien, beispielsweise in Bändern, in der Regel zu erhöhtem Abrieb und Klebrigkeit der Bänder und schließlich zu Ablagerungen am Lesekopf und zu Datenverlust führen kann.

Es bestand daher ein Bedürfnis nach Bindemitteln bzw. Bindemittelzusammensetzungen, die beispielsweise zur Herstellung von magnetischen Aufzeichnungsmedien eingesetzt werden können und dabei die oben genannten Nachteile vermeiden.

Der Erfindung lag demnach die Aufgabe zugrunde solche Bindemittel bzw. Bindemittelzusammensetzungen zur Verfügung zu stellen. Gelöst wird die der Erfindung zugrundeliegende Aufgabe durch eine Bindemittelzusammensetzung, die mindestens einen anorganischen Füllstoff und ein thermoplastisches Blockcopolyurethan mit mindestens einem Weichsegment (A) und mindestens einem Hartsegment (B) aufweist.

Gegenstand der Erfindung ist daher eine Bindemittelzusammensetzung, mindestens enthaltend einen anorganischen Füllstoff und ein thermoplastisches Blockcopolyurethan oder ein Gemisch aus zwei oder mehr thermoplastischen Blockcopolyurethanen mit mindestens einem Weichsegment (A) und mindestens einem Hartsegment (B), wobei mindestens ein Hartsegment ein Strukturelement gemäß der allgemeinen Formel I 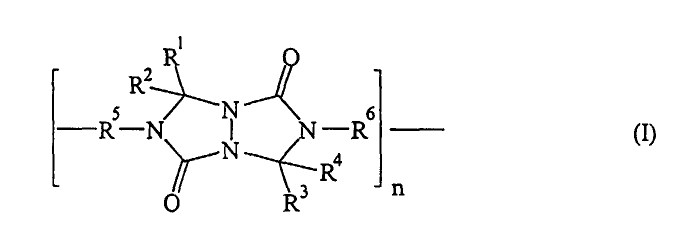 aufweist, worin R¹ und R³ für gleiche oder unterschiedliche, substituierte oder unsubstituierte aromatische oder heteroaromatische Reste mit 4 bis 40 C-Atomen und R² und R⁴ für Wasserstoff stehen oder R¹, R², R³ und R⁴ für im wesentlichen vollständig fluorierte Alkylgruppen mit 1 bis 10 C-Atomen stehen, R⁵ und R⁶ für gleiche oder unterschiedliche, substituierte oder unsubstituierte, lineare oder verzweigte aliphatische oder gegebenenfalls substituierte cycloaliphatische oder gegebenenfalls substituierte aromatische Reste mit 4 bis 40 C-Atomen und n für eine Zahl von 1 bis 100 steht.

Der Begriff "Bindemittelzusammensetzung", wie er im Rahmen des vorliegenden Textes verwendet wird, betrifft Zusammensetzungen, die mindestens ein Bindemittel und mindestens einen anorganischen Füllstoff aufweisen.

Unter einem Bindemittel wird im Rahmen der vorliegenden Erfindung ein Polymeres oder ein Gemisch aus zwei oder mehr Polymeren verstanden, die nach erfolgter chemischer oder physikalischer Trocknung wesentlich am Aufbau eines Magnetspeichermediums beteiligt sind. Ein Bindemittel im Sinne der vorliegenden Erfindung kann beispielsweise nur ein Polymeres enthalten, d. h., eine bestimmte Sorte von Polymermolekülen, wobei sich einzelne Moleküle dieser Sorte lediglich durch ihr unterschiedliches Molekulargewicht, das sich im Rahmen einer gemäß der gewählten Polymerisationsmethode erhaltenen Molekulargewichtsverteilung einstellt, unterscheiden. Die chemische Zusammensetzung solcher Polymermoleküle ist dann, wenn sich im Bindemittel nur eine einzige Sorte von Polymermolekülen befindet, im wesentlichen identisch. Das Bindemittel gemäß der vorliegenden Erfindung kann jedoch auch zwei oder mehr unterschiedliche Sorten von Polymermolekülen aufweisen. Unterschiedliche Sorten von Polymermolekülen können sich beispielsweise in ihrer Molekulargewichtsverteilung, in ihrem Molekulargewicht oder in ihrer chemischen Zusammensetzung unterscheiden. Es ist jedoch ebenso möglich, daß sich die unterschiedlichen Sorten von Polymermolekülen in zwei oder mehr der genannten Eigenschaften unterscheiden.

Unter einem Hartsegment wird im Rahmen der vorliegenden Erfindung ein Segment eines thermoplastischen Polyurethanmoleküls verstanden, wobei das Hartsegment eine Glasübergangstemperatur von mindestens etwa 50 °C aufweist.

Unter einem Weichsegment wird im Rahmen der vorliegenden Erfindung ein Segment eines Polyurethanmoleküls verstanden, das kovalent mit einem Hartsegment verbunden ist und eine Glasübergangstemperatur aufweist, die unterhalb der Gebrauchstemperatur eines aus dem erfindungsgemäßen Polymeren hergestellten magnetischen Ausfzeichnungsmediums, beispielsweise weniger als etwa 30°C, vorzugsweise weniger als etwa 20 °C, aufweist.

Unter einer Ankergruppe wird im Rahmen der vorliegenden Erfindung eine funktionelle Gruppe verstanden, die zu Wechselwirkungen mit ionischen oder nichtionischen, polaren Verbindungen in der Lage ist. Insbesondere werden unter Ankergruppen solche funktionellen Gruppen verstanden, die Wechselwirkungen mit der Oberfläche von anorganischen Füllstoffmaterialien, insbesondere mit der Oberfläche von anorganischen magnetischen oder magnetisierbaren Pigmenten einzugehen in der Lage sind.

Im nachfolgenden Text werden der Einfachheit halber die im Rahmen der vorliegenden Erfindung eingesetzten thermoplastischen Blockcopolyurethane als "thermoplastische Polyurethane" oder einfach als "Polyurethane" bezeichnet. Polyurethane, die keine thermoplastischen Eigenschaften aufweisen oder keine Blockcopolymere sind weiden nachfolgend ausdrücklich als solche gekennzeichnet.

Unter einem "anorganischen Füllstoff" wird im Rahmen der vorliegenden Erfindung ein partikelförmiger Füllstoff verstanden, der eine Partikelgröße von etwa 100 nm bis etwa 1 mm aufweist. Geeignete anorganische Füllstoffe sind beispielsweise Kreide, Titandioxid, Siliziumdioxid sowie weitere entsprechend zu Partikeln verarbeitbare Mineralien, Metalle, Ruß oder insbesondere magnetische oder magnetisierbare Pigmente, beispielsweise oxidische Pigmente wie γ-Fe₂O₃, γ-Fe₃O₄, CrO₂, Co-modifiziertes Fe₂O₃ oder metallische Pigmente wie Fe, Co und Ni. Den genannten Pigmenten können, wie allgemein üblich, weitere Elemente oder Verbindungen beigemischt sein.

Die in den erfindungsgemäßen Bindemittelzusammensetzungen enthaltenen thermoplastischen Polyurethane weisen mindestens jeweils ein Hartsegment (B) auf, das mindestens ein Strukturelement der allgemeinen Formel I 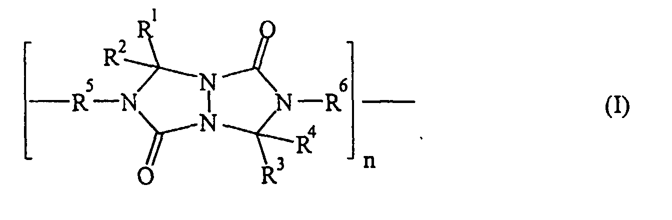 aufweist. Hierin stehen R¹ und R³ für gleiche oder unterschiedliche, substituierte oder unsubstituierte aromatische oder heteroaromatische Reste mit 4 bis 40 C-Atomen und R² und R⁴ für Wasserstoff stehen oder R¹, R², R³ und R⁴ für im wesentlichen vollständig fiuorierte Alkylgruppen mit 1 bis 10 C-Atomen.

Im Rahmen einer bevorzugten Ausführungsform der vorliegenden Erfindung stehen die Reste R² und R⁴ für einen oder zwei der folgenden Reste:

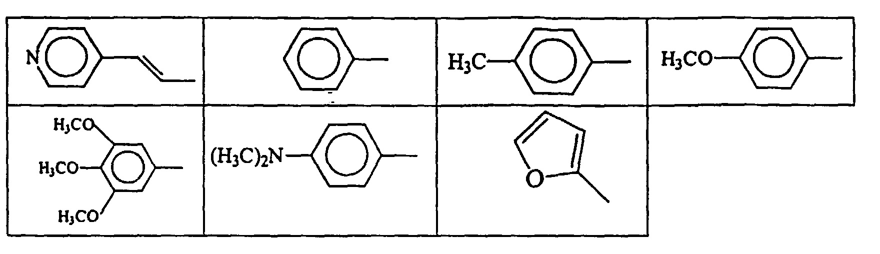

Im Rahmen einer weiteren bevorzugten Ausführungsform der vorliegenden Erfindung sind die Reste R² und R⁴ identisch. In einer weiteren bevorzugten Ausführungsform der Erfindung stehen die Reste R² und R⁴ für Methoxyphenyl oder Trimethoxyphenyl. In einer weiteren bevorzugten Ausführungsform der Erfindung stehen die Reste R² und R⁴ für Wasserstoff.

Im Rahmen der vorliegenden Erfindungen stehen die Reste R⁵ und R⁶ für gleiche oder unterschiedliche, substituierte oder unsubstituierte, lineare oder verzweigte aliphatische oder gegebenenfalls substituierte cycloaliphatische oder gegebenenfalls substituierte aromatische Reste mit etwa 4 bis etwa 40 C-Atomen. Geeignete aliphatische Reste sind beispielsweise Butylen, Pentylen, Hexylen, Heptylen, Octylen, Nonylen, Decylen sowie die höheren Homologen dieser Reihe, wie sie sich durch Verlängerung der genannten Kohlenwasserstoffketten um jeweils eine CH2-Gruppe erhalten lassen. Ebenso als Reste R⁵ und R⁶ geeignet sind zweiwertige aliphatische cyclische Reste wie Cyclohexylen, Dicyclohexylmethylen oder 3,3,5-Trimethylcyclohexylen.

Im Rahmen einer bevorzugten Ausführungsform der vorliegenden Erfindung stehen R⁵ und R⁶ für gegebenenfalls substituierte gleiche oder unterschiedliche lineare oder verzweigte aliphatische Reste mit 4 bis 10 C-Atomen oder gegebenenfalls substituierte aromatische Reste mit 6 bis 18 C-Atomen stehen.

Im Rahmen einer weiteren bevorzugten Ausführungsform der Erfindung stehen die Reste R⁵ und R⁶ für Toluylen, Tetramethylxylylen, Naphtylen, Tetrahydronaphthylen oder Diphenylenmethan.

Die Herstellung von Hartsegmenten (B), wie sie im Rahmen der vorliegenden Erfindung in den thermoplastischen Polyurethanen vorliegen, erfolgt durch criss-cross-Cycloaddition zwischen einem Azin und zwei Polyisocyanaten. Im Rahmen der vorliegenden Erfindung ist es bevorzugt, als Polyisocyanate Diisocyanate einzusetzen, es können jedoch auch Isocyanate mit einer Funktionalität von mehr als 2 oder Abmischungen daraus eingesetzt werden. Zur Herstellung der in den erfindungsgemäßen Bindemittelzusammensetzungen einsetzbaren thermoplastischen Polyurethane, insbesondere zur Herstellung der in diesen thermoplastischen Polyurethanen enthaltenen Hartsegmente (B) werden Azine der allgemeinen Formel III 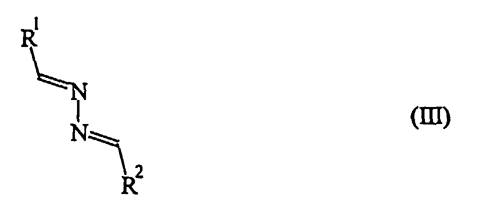 worin R¹ und R² die obengenannte Bedeutung haben. In einer bevorzugten Ausführungsform der Erfindung wird, wie bereits im Rahmen der Diskussion der Reste R¹ und R² angegeben, als Azin der allgemeinen Formel III p-Methoxybenzaldazin oder Trimethoxybenzaldazin eingesetzt. Die Umsetzung des Azins der allgemeinen Formel III zum entsprechenden Hartsegment (B) wird in einer bevorzugten Ausführungsform der Erfindung mit einem Polyisocyanat oder einem Gemisch aus zwei oder mehr Polyisocyanaten durchgeführt.

Durch entsprechende Wahl des stöchiometrischen Verhältnisses von Azinen zu Diisocyanaten lassen sich so oligomere oder polymere Verbindungen herstellen, die gemäß dem obigen Reaktionsschema zwei Isocyanatendgruppen aufweisen. Derartige Verbindungen entsprechen der allgemeinen Formel II

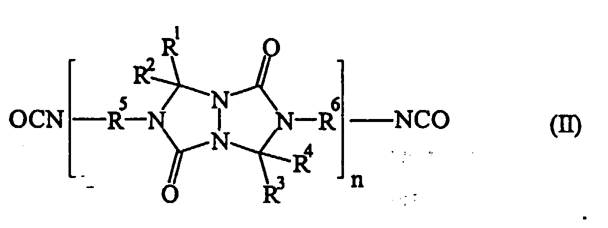

Die Molekulargewichte der so erhältlichen, zur Herstellung von Hartsegmenten (B) im thermoplastischen Polyurethane geeigneten polymeren Diisocyanate der allgemeine Formel II können im Rahmen der vorliegenden Erfindung etwa 500 bis etwa 30.000 betragen. In Abhängigkeit von den eingesetzten Azinen und den eingesetzten Diisocyanaten lassen sich unterschiedliche Molekulargewichte realisieren. In einer bevorzugten Ausführungsform der Erfindung weisen die zur Herstellung der Hartsegmente (B) eingesetzten Verbindungen der allgemeinen Formel II ein Molekulargewicht von etwa 1000 bis etwa 20.000, beispielsweise etwa 1100 bis etwa 18.000 auf. In einer weiteren bevorzugten Ausführungsformen der Erfindung weisen die zur Herstellung der Hartsegmente (B) eingesetzten Verbindungen der allgemeinen Formel II ein Molekulargewicht von etwa 1200 bis etwa 5000, insbesondere etwa 1300 bis etwa 3000 auf.

Zur Herstellung der Verbindungen der allgemeinen Formel II eignen sich grundsätzlich alle Diisocyanate, die bei Umsetzung mit einem Azin zu polymeren Diisocyanaten gemäß der allgemeinen Formel II führen, welche die obengenannten Spezifikationen erfüllen. In einer bevorzugten Ausführungsform der Erfindung werden beispielsweise lineare aliphatische Isocyanate wie 1,4-Tetramethylendiisocyanat, 1,5-Pentamethylendiisocyanat oder 1,6-Hexamethylendiisocyanat, aliphatische cyclische Diisocyanate wie 1,4-Cyclohexylendiisocyanat, Dicyclohexylmethandiisocyanat oder Isophorondiisocyanat (IPDI) eingesetzt. Weiterhin im Rahmen der vorliegenden Erfindung als Diisocyanate geeignet sind aromatische Diisocyanate wie Toluylen-2,4-diisocyanat (2,4-TDI), Toluylen-2,6-Diisocyanat (2,6-TDI), das Isomerengemisch der beiden letztgenannten Diisocyanate, m-Tetramethylxylylendiisocyanat (TMXDI), p-Tetramethylxylylendiisocyanat, 1,5-Naphthylendiisocyanat, 1,5-Tetrahydronaphthylendiisocyanat 2,2'-Diphenylmethandiisocyanat, 2,4'-Diphenylmethandiisocyanat und 4,4'-Diphenylmethandiisocyanat sowie Gemische aus zwei oder mehr der genannten Diisocyanate. Dies ist selbstverständlich im Rahmen der vorliegenden Erfindung möglich und vorgesehen, bei der Umsetzung zwischen Azinen und Diisocyanaten ein Gemisch von zwei oder mehr Azinen oder ein Gemisch von zwei oder mehr Diisocyanaten, oder beides, einzusetzen. In diesem Fall resultieren Verbindungen der allgemeinen Formel II, die unterschiedliche Reste R¹ und R³ sowie R⁵ und R⁶ aufweisen können. In einer bevorzugten Ausführungsform er Erfindung weisen die Verbindungen der allgemeinen Formel II jedoch identische Reste R¹ und R³ sowie R⁵ und R⁶ auf.

Geeignete Verfahren zur Herstellung von Verbindungen der allgemeinen Formel II werden beispielsweise in der Veröffentlichung von G. Maier, "Polymers by 1,3-dipolar cycloaddition reactions: the 'criss-cross' cycloaddition", *Macromol. Chem. Phys.* **197**, *3067-3090 (1996)* beschrieben, die, insbesondere bezüglich der Offenbarung auf den Seiten 3078 - 3088, Bestandteil der Offenbarung des vorliegenden Textes ist.

Zur Herstellung eines thermoplastischen Polyurethans, das ein Strukturelement gemäß der allgemeinen Formel I im Hartsegment (B) aufweist, wird im Rahmen der vorliegenden Erfindung eine Verbindung der allgemeinen Formel II mit einer als Weichsegment (A) geeigneten Verbindung umgesetzt, die mindestens zwei gegenüber den Isocyanatgruppen der Verbindung der allgemeinen Formel II unter Ausbildung einer kovalenten Bindung reaktive funktionelle Gruppen Y besitzt.

Das erfindungsgemäße Polyurethan enthält mindestens eine Sorte Weichsegment A. Es ist im Rahmen der vorliegenden Erfindung jedoch ebensogut möglich, daß das thermoplastische Polyurethan zwei oder mehr verschiedene Sorten von Weichsegmenten A enthält. Bei den zwei oder mehr verschiedenen Sorten von Weichsegmenten A kann es sich beispielsweise um identische Weichsegmente handeln, das heißt, um Weichsegmente, die einen im wesentlichen identischen chemischen Aufbau aufweisen. Es ist jedoch im Rahmen der vorliegenden Erfindung ebensogut möglich, daß zwei oder mehr unterschiedliche Weichsegmente A eingesetzt werden. So kann ein im Rahmen eines erfindungsgemäßen Bindemittels eingesetztes thermoplastisches Polyurethan beispielsweise einen Polyester und einen Polyether als Weichsegmente A aufweisen.

Grundsätzliche eignen sich als Weichsegmente A alle Polymere, die sich in den verwendeten Lösungsmitteln lösen und vorzugsweise ein T_{g} von unter 20 °C aufweisen. Beispielsweise Polyester, Polyether, Polyacetale, Polycarbonate, Polyesterether, und dergleichen.

Die genannten, zum Einsatz als Weichsegmente A geeigneten Verbindungen weisen mindestens eine funktionelle Gruppe Y auf. In einer bevorzugten Ausführungsform der Erfindung weisen die als Weichsegmente A geeigneten Verbindungen mindestens zwei funktionelle Gruppen Y auf. In einer weiteren bevorzugten Ausführungsform der Erfindung sind die funktionellen Gruppen Y endständig an den zum Einsatz als Weichsegment A geeigneten Verbindungen angebracht.

Grundsätzlich steht Y für eine funktionelle Gruppe, die zur Reaktion mit einer NCO-Gruppe unter Ausbildung einer kovalenten Bindung fähig ist. In einer bevorzugten Ausführungsform der Erfindung steht Y für OH, NH₂, NHR, SH oder COOH, wobei R für einen linearen oder verzweigten, gesättigten oder ungesättigten Alkylrest mit 1 bis 24 C-Atomen oder einen Arylrest mit 6 bis 24 C-Atomen steht.

In einer weiteren bevorzugten Ausführungsform der Erfindung steht Y für eine OH-, NH- oder NR-Gruppe, insbesondere für eine OH-Gruppe. Im weiteren Verlauf des Textes werden zur Herstellung von Weichsegmenten A geeignete Verbindungen beschrieben. Der Übersichtlichkeit halber werden die Verbindungen, soweit nichts anderes angegeben ist, als OH-Gruppen tragende Verbindungen dargestellt. Es ist jedoch im Rahmen der vorliegenden Erfindung ebensogut möglich, entsprechende Verbindungen einzusetzen, die anstatt der in der weiteren Beschreibung dargestellten OH-Gruppe eine andere gegenüber NCO-Gruppen reaktive funktionelle Gruppe, beispielsweise eine der anderen für Y genannten funktionellen Gruppen tragen, soweit eine entsprechende Verbindung existiert oder herstellbar ist.

Zur Bildung von Weichsegmenten geeignete Polyester sind beispielsweise überwiegend lineare Polymere mit endständigen OH-Gruppen, bevorzugt solche mit zwei oder drei, insbesondere mit zwei OH-Endgruppen. Die Polyesterpolyole lassen sich in einfacher Weise durch Veresterung von linearen oder verzweigten, gesättigten oder ungesättigten aliphatischen oder entsprechend geeigneten aromatischen Dicarbonsäuren mit 4 bis etwa 15 C-Atomen, vorzugsweise 4 bis etwa 10 C-Atomen mit Glykolen, bevorzugt Glykolen mit etwa 2 bis etwa 25 C-Atomen oder durch Polymerisation von Lactonen mit etwa 3 bis etwa 20 C-Atomen herstellen. Als Dicarbonsäuren lassen sich beispielsweise Glutarsäure, Pimelinsäure, Korksäure, Sebacinsäure, Dodecansäure und vorzugsweise Adipinsäure oder Bernsteinsäure, oder Gemische aus zwei oder mehr der genannten Dicarbonsäuren einsetzen. Geeignete aromatische Dicarbonsäuren sind Terephthalsäure, Isophthalsäure, Phthalsäure oder Mischungen aus zwei oder mehr dieser Dicarbonsäuren. Ebenso geeignete sind Gemische aus einer oder mehreren der genannten aromatischen Dicarbonsäuren mit aliphatischen oder weiteren aromatischen Dicarbonsäuren, beispielsweise mit Diphensäure, Pentadiensäure, Bernsteinsäure oder Adipinsäure.

Zur Herstellung der Polyesterpolyole kann es gegebenenfalls vorteilhaft sein, anstelle der Dicarbonsäuren entsprechende Säurederivate wie Carbonsäureanhydride, Ester, insbesondere Methylester, oder Carbonsäurechloride zu verwenden, sofern diese erhältlich sind.

Die im Rahmen der vorliegenden Erfindung zum Einsatz als Weichsegment geeigneten Polyesterpolyole sind durch Umsetzung von Dicarbonsäuren mit entsprechenden Glykolen herstellbar. Grundsätzlich zur Herstellung der Polyesterpolyole geeignete Glykole sind lineare oder verzweigte, gesättigte oder ungesättigte, aliphatische oder aromatische Glykole. Beispielsweise sind dies Diethylenglykol, 1,2-Ethandiol, 1,3-Propandiol, 2-Methyl-1,3-propandiol, 1,4-Butandiol, 1,5-Pentandiol, 1,6-Hexandiol, 1,7-Heptandiol, 1,8-Octandiol, 1,9-Nonandiol, 1,10-Decandiol sowie die entsprechenden höheren Homologen, wie sie sich durch schrittweise Verlängerung der Kohlenstoffkette der genannten Verbindungen bilden lassen sowie beispielsweise 2,2,4-Trimethylpentandiol-1,5, 2,2-Dimethylpropandiol-1,3, 1,4-Dimethylolcyclohexan, 1,4-Diethanolcyclohexan, 2-Methyl-2-butyl-1,3-propandiol, 2,2-Dimethyl-1,4-butandiol, 1,4-Dimethylolcyclohexan, Hydroxypivalinsäureneopentylglykolester, Diethylenglykol, Triethylenglykol, Methyldiethanolamin oder aromatisch-aliphatische oder aromatisch-cycloaliphatische Diole mit 8 bis etwa 30 C-Atomen, wobei als aromatische Strukturen heterocyclische Ringsysteme oder vorzugsweise isocyclische Ringsysteme wie Naphthalin- oder insbesondere Benzolderivate wie Bisphenol A eingesetzt werden können, zweifach symmetrisch ethoxyliertes Bisphenol A, zweifach symmetrisch propoxyliertes Bisphenol A, höher ethoxylierte oder propoxylierte Bisphenol A-Derivate oder Bisphenol F-Derivate, die Hydrierungsprodukte der genannten Bisphenol-A- und Bispbenol-F-Derivate oder die Produkte der entsprechenden Umsetzung von einer Verbindung oder einem Gemisch aus zwei oder mehr der genannten Verbindungen mit einem Alkylenoxid mit zwei bis etwa 8 C-Atomen oder einem Gemisch aus zwei oder mehr solcher Alkylenoxide.

In einer bevorzugten Ausführungsform der Erfindung werden 1,2-Ethandiol, 1,3-Propandiol, 2-Methyl-1,3-propandiol, 1,4-Butandiol, 1,6-Hexandiol, 2,2-Dimethylpropandiol-1,3, 1,4-Dimethylolcyclohexan, 1,4-Diethanolcyclohexan und ethoxylierte oder propoxylierte Produkte des 2,2-Bis-(4-hydroxyphenylen)-propan (Bisphenol A) eingesetzt. Je nach den gewünschten Eigenschaften der mit den entsprechenden Weichsegmenten ausgestatteten thermoplastischen Polyurethane können die genannten Polyesterpolyole alleine oder als Mischung von zwei oder mehr der genannten Polyesterpolyole in verschiedenen Mengenverhältnissen zur Herstellung der thermoplastischen Polyurethane eingesetzt werden. Als Lactone für die Herstellung der Polyesterpolyole eignen sich zum Beispiel α,α-Dimethyl-γ-propiolacton, β-Butyrolacton und ε-Caprolacton.

Ebenfalls zum Einsatz als Weichsegmente A bei der Herstellung der obengenannten thermoplastischen Polyurethane geeignet sind die Polyetherpolyole. Unter Polyetherpolyolen werden im wesentlichen lineare, im Sinne des oben gesagten endständige OH-Gruppen aufweisende Substanzen mit Etherbindungen verstanden. Geeignete Polyetherpolyole können beispielsweise durch Polymerisation von cyclischen Ethern wie Tetrahydrofuran oder durch Umsetzung von einem oder mehreren Alkylenoxiden mit 2 bis 4 C-Atomen im Alkylenrest mit einem Startermolekül, das zwei aktive Wasserstoffatome aufweist, hergestellt werden. Als Alkylenoxide eignen sich beispielsweise Ethylenoxid, 1,2-Propylenoxid, Epichlorhydrin, 1,2-Butylenoxid oder 2,3-Butylenoxid oder Gemische aus zwei oder mehr davon.

Geeignete Polyesterpolyole und Polyetherpolyole sowie deren Herstellung nennt beispielsweise die EP-B 0 416 386.

Im Rahmen der vorliegenden Erfindung können als Weichsegmente A beispielsweise auch Polycarbonate eingesetzt werden. In einer bevorzugten Ausführungsform der Erfindung werden Polycarbonate eingesetzt, die im wesentlichen linear sind und über mindestens zwei, vorzugsweise endständige, OH-Gruppen verfügen. Die Herstellung entsprechender Polycarbonatpolyole erfolgt beispielsweise durch Umsetzung eines der obengenannten difunktionellen Alkohole oder eines Gemischs aus zwei oder mehr solcher difunktioneller Alkohole mit Phosgen. Geeignete Polycarbonatpolyole, beispielsweise solche auf 1,6-Hexandiol Basis sowie deren Herstellung, werden beispielsweise in der US-A 4,131,731 beschriebenen.

In Mengen von bis zu etwa 5 Gew.-%, bezogen auf die gesamte Masse der im thermoplastischen Polyurethan enthaltenen Weichsegmente, können beispielsweise auch aliphatische Alkohole mit drei oder mehr funktionellen Gruppen und 3 bis etwa 15, vorzugsweise etwa 3 bis etwa 10 C-Atomen bei der Herstellung der Weichsegmente eingesetzt werden. Entsprechend geeignete Verbindungen sind beispielsweise Trimethylolpropan, Triethylolpropan, Glyzerin, Pentaerythrit, Sorbit, Mannit und weitere Zuckeralkohole mit bis zu etwa 10 OH-Gruppen pro Molekül. Ebenfalls zur Herstellung der Weichsegmente einsetzbar sind die entsprechenden Derivate der genannten Verbindungen, wie sie sich durch. Umsetzung mit einem Alkylenoxid mit 2 bis etwa 4 C-Atomen oder einem Gemisch aus zwei oder mehr solcher Alkylenoxide erhalten lassen. In einer. weiteren Variante können auch Carbonsäuren oder Derivate davon mit drei oder mehr funktionellen Gruppen eingesetzt werden. Die genannten Verbindungen sind jeweils alleine oder auch als Gemische aus zwei oder mehr der genannten Verbindungen einsetzbar.

In einer bevorzugten Ausführungsform der Erfindung werden beispielsweise Polyester als Weichsegment (A) eingesetzt, die aus einer Umsetzung von Adipinsäure oder Isophthalsäure und oder deren Gemisch mit 1,6-Hexandiol oder Cyclohexandimethanol oder deren Gemisch erhältlich sind.

In einer bevorzugten Ausführungsform der Erfindung weisen die Weichsegmente (A) Glasübergangstemperaturen von etwa -50 °C bis etwa 20 °C auf. In einer weiteren bevorzugten Ausführungsform der Erfindung liegen die Glasübergangstemperaturen der Weichsegmente (A) in einem Bereich von etwa -30 °C bis etwa 0 °C. Um die gewünschten mechanischen Eigenschaften des erfindungsgemäßen Bindemittels zu gewährleisten, sollte das Weichsegment (A) ein Molekulargewicht von etwa 500 bis etwa 25.000 g/mol aufweisen. In einer bevorzugten Ausführungsform der Erfindung werden Weichsegmente (A) eingesetzt, die ein Molekulargewicht von etwa 2000 bis etwa 10.000 g/mol, beispielsweise etwa 3000 bis etwa 7000 g/mol aufweisen.

Zum Einsatz als Weichsegmente (A) geeignete Verbindungen der vorgenannten Verbindungsklassen können bereits in einem zum Einsatz als Weichsegment (A) geeigneten Molekulargewichtsbereich vorliegen. Es ist jedoch ebensogut möglich, Verbindungen der obengenannten Verbindungsklassen zur Herstellung von Weichsegmente (A) einzusetzen, die ein Molekulargewicht aufweisen, das unterhalb des zum Einsatz als Weichsegment (A) geeigneten Molekulargewichts oder gewünschten Molekulargewichts liegt. In diesem Fall ist es im Rahmen der vorliegenden Erfindung möglich, solche Verbindungen der obengenannten Verbindungsklassen durch Umsetzung mit entsprechenden di- oder höher funktionellen Verbindungen bis zum Erreichen des erforderlichen oder gewünschten Molekulargewichts zu verlängern. In Abhängigkeit von der Endgruppe Y eignen sich hier zu beispielsweise Dicarbonsäuren, difunktionelle Epoxyverbindungen oder Diisocyanate, wobei in einer bevorzugten Ausführungsform der vorliegenden Erfindung Diisocyanate eingesetzt werden.

Grundsätzlich werden zur obengenannten Molekulargewichtserhöhung solche di- oder höherfunktionellen Verbindungen eingesetzt, die zu einer Glasübergangstemperatur des verlängerten Weichsegments (A) führen, die innerhalb des gewünschten Bereichs liegt. In einer bevorzugten Ausführungsform der Erfindung werden daher im genannten Fall Verbindungen zur Molekulargewichtserhöhung bei der Herstellung der Weichsegmente (A) Diisocyanate, vorzugsweise solche mit 6 bis 30 C-Atomen eingesetzt. Im einzelnen sind zu nennen: lineare aliphatische Diisocyanate wie 1,4-Tetramethylendiisocyanat, 1,5-Pentamethylendiisocyanat oder 1,6-Hexamethylendiisocyanat; aliphatische cyclische Diisocyanate wie 1,4-Cyclohexylendiisocyanat, Dicyclohexylmethandiisocyanat oder Isophorondiisocyanat (IPDI); aromatische Diisocyanate wie Toluylen-2,4-diisocyanat (2,4-TDI), Toluylen-2,6-Diisocyanat (2,6-TDI), das Isomerengemisch der beiden letztgenannten Diisocyanate, m-Tetramethylxylylendiisocyanat (TMXDI), p-Tetramethylxylylendiisocyanat, 1,5-Naphthylendiisocyanat, 1,5-Tetrahydronaphthylendiisocyanat 2,2'-Diphenylmethandiisocyanat, 2,4'-Diphenylmethandiisocyanat und 4,4'-Diphenylmethandiisocyanat sowie Gemische aus zwei oder mehr der genannten Diisocyanate. In einer weiteren bevorzugten Ausführungsform der Erfindung werden Diisocyanate eingesetzt, die einen aromatischen Molekülbestandteil aufweisen.

Gegebenenfalls können zur Molekulargewichtserhöhung noch vergleichsweise niedermolekulare Diole verwendet werden. Beispielsweise sind dies Diethylenglykol, 1,2-Ethandiol, 1,3-Propandiol, 2-Methyl-1,3-propandiol, 1,4-Butandiol, 1,5-Pentandiol, 1,6-Hexandiol, 1,7-Heptandiol, 1,8-Octandiol, 1,9-Nonandiol, 1,10-Decandiol sowie die entsprechenden höheren Homologen, wie sie sich durch schrittweise Verlängerung der Kohlenstoffkette der genannten Verbindungen bilden lassen sowie beispielsweise 2,2,4-Trimethylpentandiol-1,5, 2,2-Dimethylpropandiol-1,3, 1,4-Dimethylolcyclohexan, 1,4-Diethanolcyclohexan, 2-Methyl-2-butyl-1,3-propandiol, 2,2-Dimethyl-1,4-butandiol, 1,4-Dimethylolcyclohexan, Hydroxypivalinsäureneopentylglykolester, Diethylenglykol, Triethylenglykol, Methyldiethanolamin oder aromatisch-aliphatische oder aromatischcycloaliphatische Diole mit 8 bis etwa 30 C-Atomen, wobei als aromatische Strukturen heterocyclische Ringsysteme oder vorzugsweise isocyclische Ringsysteme wie Naphthalin- oder insbesondere Benzolderivate wie Bisphenol A eingesetzt werden können.

Gegebenenfalls können bei einer solchen Molekulargewichtserhöhung noch weitere, niedermolekulare Aminoverbindungen vorliegen. Hierzu geeignet sind beispielsweise primäre Aminoverbindungen mit zwei bis etwa 20, beispielsweise 2 bis etwa 12 C-Atomen wie Ethylamin, n-Propylamin, i-Propylamin, n-Propylamin, sek.-Propylamin, tert.-Butylamin, 1-Aminoisobutan, substituierte Amine mit zwei bis etwa 20 C-Atomen wie 2-(N,N-Dimethylamino)-1-Aminoethan, Aminomercaptane wie 1-Amino-2-mercaptoethan, aliphatische Aminoalkohole mit 2 bis etwa 20, vorzugsweise 2 bis etwa 12 C-Atomen, beispielsweise Methanolamin, 1-Amino-3,3-dimethyl-pentan-5-ol, 2-Aminohexan-2', 2''-diethanolamin, 1-Amino-2,5-dimethylcyclohexan-4-ol- 2-Aminopropanol, 2-Aminobutanol, 3-Aminopropanol, 1-Amino-2-propanol, 2-Amino-2-methyl-1-propanol, 5-Aminopentanol, 3-Aminomethyl-3,5,5-trimethylcyclohexanol, 1-Amino-1-cyclopentan-methanol, 2-Amino-2-ethyl-1,3-propandiol, aromatisch-aliphatische oder aromatisch-cycloaliphatische Aminoalkohole mit 6 bis etwa 20 C-Atomen, wobei als aromatische Strukturen heterocyclische Ringsysteme oder vorzugsweise isocyclische Ringsysteme wie Naphthalin- oder insbesondere Benzolderivate wie 2-Aminobenzylalkohol, 3-(Hydroxymethyl)-anilin, 2-Amino-3-phenyl-1-propanol, 2-Amino-1-phenylethanol, 2-Phenylglycinol oder 2-Amino-1-phenyl-1,3-propandiol oder Gemische aus zwei oder mehr solcher Verbindungen.

Die zum Aufbau der Hartsegmente und/oder Weichsegmente in den thermoplastischen Polyurethanen eingesetzten Verbindungen können gegebenenfalls Ankergruppen aufweisen.

Unter Ankergruppen werden anionische oder kationische funktionelle Gruppen oder deren Salze verstanden, die attraktive Wechselwirkungen mit polaren Oberflächen, beispielsweise mit Oberflächen von anorganischen Füllstoffe, eingehen. Als Ankergruppen eignen sich beispielsweise Carboxylgruppen, Sulfonsäuregruppen, Phosphonsäuregruppen, Phosphorsäuregruppen oder geeignete Salze derartiger Gruppen, quaternäre Aminogruppen oder Derivate, wie z.B. ein Ester, ein primäres, sekundäres oder tert. Amin oder zwei oder mehr der jeweils genannten Ankergruppen oder ein Gemisch aus zwei oder mehr der genannten Ankergruppen. Die Ankergruppen werden in der dem Fachmann bekannten Weise eingeführt.

In einer bevorzugten Ausführungsform der Erfindung weisen die Hartsegmente (B) Glasübergangstemperaturen von mehr als etwa 50°C bis etwa 160 °C auf. In einer weiteren bevorzugten Ausführungsform der Erfindung liegen die Glasübergangstemperaturen der Hartsegmente (B) in einem Bereich von etwa 100 °C bis etwa 155 °C, beispielsweise in einem Bereich von etwa 110 °C bis etwa 150 °C. Um die gewünschten mechanischen Eigenschaften des erfindungsgemäßen Bindemittels zu gewährleisten, sollten die Hartsegmente (B) ein Molekulargewicht von etwa 350 bis etwa 15.000 g/mol aufweisen. In einer bevorzugten Ausführungsform der Erfindung werden Hartsegmente (B) eingesetzt, die ein Molekulargewicht von etwa 500 bis etwa 10.000 g/mol, beispielsweise etwa 800 bis etwa 4.000 g/mol oder etwa 1000 bis etwa 2500 g/mol aufweisen.

Die Herstellung der Weichsegmente (A) wird nach den üblichen Regeln der organischen Polymerchemie durchgeführt. Wenn als Weichsegment ein Polyester, ein Polyether, ein Polycarbonat, ein Polyacetal oder eine sonstige als Weichsegment einsetzbare Verbindung mit funktionellen Gruppen Y eingesetzt wird, so wird deren Herstellung nach üblichen, dem Fachmann bekannten Methoden der Polymerchemie durchgeführt. Sollen verschiedene der genannten, als Weichsegment einsetzbaren Verbindungen miteinander aufgrund eines zu geringen Molekulargewichts der einzelnen Verbindungen verbunden werden, so geschieht dies, in Abhängigkeit von der zur Kettenverlängerung verwendeten difunktionellen Verbindung, ebenfalls nach den üblichen, in der organischen Chemie bekannten Regeln für die jeweiligen funktionellen Gruppen.

Die Umsetzung der als Weichsegmente geeigneten Verbindungen mit den als Hartsegmenten geeigneten Verbindungen der allgemeinen Formel II kann in an sich bekannter Weise vorgenommen werden, vorzugsweise bei Temperaturen von etwa 0 bis etwa 120 °C. Das Verhältnis der beiden Komponenten wird vorteilhafterweise so gewählt, daß das Verhältnis von Y zu NCO-Gruppen etwa 2 bis etwa 1 beträgt. Den üblichen Regeln der Polymerchemie folgend läßt sich durch entsprechende Variationen des genannten Verhältnisses das Molekulargewicht der erhaltenen thermoplastischen Polyurethane in weiten Grenzen steuern.

Gegenstand der Erfindung ist daher auch eine Bindemittelzusammensetzung, enthaltend einen anorganischen Füllstoff und ein thermoplastisches Polyurethan mit mindestens einem Weichsegment (A) und einem Hartsegment (B), wobei das thermoplastische Polyurethan durch Umsetzung von mindestens zwei Komponenten L und M, bei der
a) als Komponente L eine Verbindung der allgemeinen Formel II 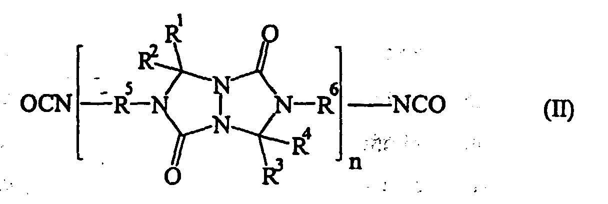 worin R¹, R², R³, R⁴, R⁵, R⁶ und n die bereits oben angegebene Bedeutung haben und
b) als Komponente M eine mindestens difunktionelle, gegenüber Isocyanatgruppen unter Ausbildung einer kovalenten Bindung reaktionsfähige Verbindung mit einem Molekulargewicht von mindestens 300
eingesetzt wird, erhältlich ist.

Als Komponente L wird im Rahmen der vorliegenden Erfindung demnach eine Verbindung eingesetzt, die zur Bildung von Hartsegmenten (B) geeignet ist, die ein Strukturelement der allgemeinen Formel I aufweisen. Als Komponente M wird eine Verbindung eingesetzt, die im Rahmen des vorliegenden Textes als zur Bildung von Weichsegmenten (A) geeignet beschrieben wurde. Entsprechende Komponenten M weisen demnach eine Struktur Y-M-Y auf, wobei Y die bereits oben angegebene Bedeutung hat.

Ein weiterer Gegenstand der vorliegenden Erfindung ist demnach ein Verfahren zur Herstellung einer erfindungsgemäßen Bindemittelzusammensetzung, bei dem ein anorganischer Füllstoff und ein thermoplastisches Blockcopolyurethan oder ein Gemisch aus zwei oder mehr thermoplastischen Blockcopolyurethanen mit mindestens einem Weichsegment (A) und mindestens einem Hartsegment (B), wobei mindestens ein Hartsegment ein Strukturelement gemäß der allgemeinen Formel I 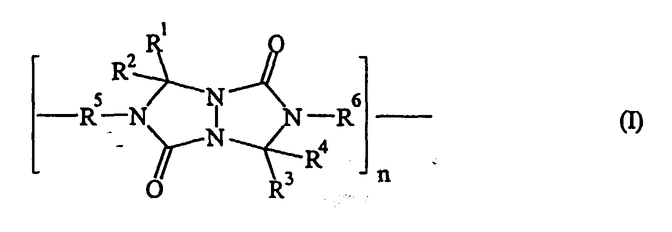 aufweist, worin R¹ und R³ für gleiche oder unterschiedliche, substituierte oder unsubstituierte aromatische oder heteroaromatische Reste mit 4 bis 40 C-Atomen und R² und R⁴ für Wasserstoff stehen oder R¹, R², R³ und R⁴ für im wesentlichen vollständig fluorierte Alkylgruppen mit 1 bis 10 C-Atomen stehen, R⁵ und R⁶ für gleiche oder unterschiedliche, substituierte oder unsubstituierte, lineare oder verzweigte aliphatische oder gegebenenfalls substituierte cycloaliphatische oder gegebenenfalls substituierte aromatische Reste mit 4 bis 40 C-Atomen und n für eine Zahl von 1 bis 100 steht, miteinander vermischt werden.

Mindestens eines der in der erfindungsgemäßen Bindemittelzusammensetzung vorliegenden thermoplastischen Polyurethane weist ein Molekulargewicht von etwa 3.000 bis etwa 150.000 g/mol, vorzugsweise 10.000 bis 60.000 g/mol auf.

Die Umsetzung kann gegebenenfalls in Gegenwart eines Katalysators vorgenommen werden. In einer bevorzugten Ausführungsform handelte sich dabei beispielsweise um ein tertiäres Amin wie Triethylamin, Tributylamin, Diazabicyclo(2,2,2)octan, N-Methylpyridin oder N-Methylmorpholin. Weitere geeignete Katalysatoren sind metallorganische Verbindungen wie Dibutylzinndilaurat und Metallsalze wie Zinnoctoat, Bleioctoat oder Zinkstearat. Die während der Reaktionen vorliegende Katalysatormenge beträgt im allgemeinen etwa 1 bis etwa 500 Gew.-ppm.

Die Mitverwendung eines Löse- oder Verdünnungsmittels ist in der Regel nicht erforderlich. Im Rahmen einer bevorzugten Ausführungsform wird jedoch ein Lösemittel oder ein Gemisch aus zwei oder mehr Lösemitteln eingesetzt. Geeignete Lösemittel sind beispielsweise Kohlenwasserstoffe, insbesondere Toluol, Xylol oder Cyclohexan, Ester, insbesondere Ethylglykolacetat, Ethylacetat oder Butylacetat, Amide, insbesondere Dimethylformamid oder N-Methylpyrrolidon, Sulfoxide, insbesondere Dimethylsulfoxid, Ether, insbesondere Diisopropylether oder Methyl-tert.-butylether oder bevorzugt cyclische Ether, insbesondere Tetrahydrofuran oder Dioxan.

Wenn bei der Herstellung der thermoplastischen Polyurethane die als Weichsegment geeignete Verbindung im Überschuß zur entsprechenden das Hartsegment bildenden Verbindung gemäß der allgemeinen Formel II eingesetzt wird, so entsteht ein thermoplastisches Polyurethan, das als Endgruppen funktionelle Gruppen Y trägt. Zur Herstellung von thermoplastischen Polyurethanen gemäß der allgemeinen Formel II können diese, gegenüber Isocyanatgruppen reaktive Endgruppen enthaltenden Verbindungen mit gegenüber solchen Gruppen Y difunktionellen Verbindungen unter Kettenverlängerung umgesetzt werden. Entsprechende difunktionelle Verbindungen der allgemeinen Formel X-Z-X weisen als funktionelle Gruppen X gegenüber den funktionellen Gruppen Y reaktive Gruppen auf. Beispiele solche funktionelle Gruppen X sind in erster Linie die Isocyanatgruppen, die im Rahmen einer bevorzugten Ausführungsform der vorliegenden Erfindung eingesetzt werden. Je nach Art der funktionellen Gruppe Y kann X jedoch auch für andere gegenüber Y reaktive funktionelle Gruppen stehen, beispielsweise für Epoxygruppen, Carbonsäuregruppen, Carbonsäureanhydride oder Carbonsäurehalogenide.

In einer bevorzugten Ausführungsform der Erfindung weist Z als funktionelle Gruppen X mindestens zwei Epoxy-, OH-, NCO- oder COOH-Gruppen oder ein untereinander nicht reaktives Gemisch aus zwei oder mehr davon auf.

Die erfindungsgemäße Bindemittelzusammensetzung enthält mindestens ein thermoplastisches Polyurethan das mindestens ein Hartsegment (B) aufweist, wobei mindestens eines der Hartsegmente (B) ein Strukturelement gemäß der allgemeinen Formel II aufweist. In einer bevorzugten Ausführungsform der vorliegenden Erfindung enthält die erfindungsgemäße Bindemittelzusammensetzung ein solches thermoplastisches Polyurethan oder ein Gemisch aus zwei oder mehr solcher thermoplastischen Polyurethane in einer Menge von mindestens etwa 1 Gew.-% vorzugsweise mindestens etwa 5 Gew.-%, insbesondere mindestens etwa 10 Gew.-%, bezogen auf die gesamte Bindemittelzusammensetzung. Neben den genannten thermoplastischen Polyurethanen kann das erfindungsgemäße Bindemittel noch ein weiteres thermoplastisches Polyurethan ohne ein entsprechendes Strukturelement der allgemeinen Formel I oder ein Gemisch aus zwei oder mehr solcher weiteren thermoplastischen Polyurethane enthalten.

Im Rahmen einer weiteren bevorzugten Ausführungsform der vorliegenden Erfindung enthalten die erfindungsgemäßen Bindemittelzusammensetzungen neben dem bereits genannten thermoplastischen Polyurethan mit Strukturelementen gemäß der allgemeinen Formel I oder einem Gemisch aus zwei oder mehr solcher Polyurethane noch mindestens ein weiteres Polymeres.

Die erfindungsgemäßen Bindemittel können neben den genannten thermoplastischen Polyurethanen oder deren Gemischen noch ein weiteres Polymeres oder ein Gemisch aus zwei oder mehr weiteren Polymeren enthalten. Zu den weiteren im Rahmen des erfindungsgemäßen Bindemittels einsetzbaren Polymeren zählen Polyurethane, Polyacrylate, Polyesterpolyurethane, Poly(meth)acrylaturethane, Polymethacrylate, Polyacrylamide, Polymere oder Copolymere aus Vinylmonomeren wie Styrol, Vinylchlorid, Vinylacetat, Vinylpropionat, Bindemittel auf Basis von Vinylformalen, cellulosehaltige Polymere wie Celluloseester, insbesondere Cellulosenitrate, Celluloseacetate, Celluloseacetopropionat oder Celluloseacetobutyrat, Phenoxyharze oder Epoxyharze, wie sie in an sich bekannter Weise erhalten werden können, oder Gemische aus zwei oder mehr davon.

Die erfindungsgemäßen Bindemittelzusammensetzungen enthalten die thermoplastischen Polyurethane mit einem Strukturelement gemäß der allgemeinen Formel I in der Regel in einer Menge von bis zu etwa 100 Gew.-% Weitere Polymere können in einem Anteil von bis zu etwa 80 Gew.-%, beispielsweise bis zu etwa 70, 60, 50, 40, 30 Gew.-%, oder darunter, im erfindungsgemäßen Bindemittel enthalten sein.

Die erfindungsgemäßen Bindemittelzusammensetzungen sind sowohl als Dispergierbindemittel als auch als Auflackbindemittel einsetzbar.

Im Rahmen einer bevorzugten Ausführungsform der Erfindung enthalten die erfindungsgemäßen Bindemittel ein magnetisches Pigment oder ein Gemisch aus zwei oder mehr magnetischen Pigmenten. Als magnetische Pigmente kommen die üblichen oxidischen Pigmente wie γ-Fe₂O₃, γ-Fe₃O₄, CrO₂, Co-modifiziertes Fe₂O₃ oder metallische Pigmente wie Fe, Co und Ni in Betracht. Diesen Pigmenten können, wie allgemein üblich, weitere Elemente oder Verbindungen beigemischt sein.

Darüber hinaus können die erfindungsgemäßen Bindemittel noch Füllstoffe, Dispergierhilfsmittel, weitere Zusatzstoffe wie Gleitmittel, Ruß oder nichtmagnetische anorganische oder organische Pigmente enthalten.

Zur Herstellung der erfindungsgemäßen Magnetdispersionen können daher ein thermoplastisches Polyurethan oder ein Gemisch aus zwei oder mehr der obengenannten thermoplastischen Polyurethane mit einem magnetischen Pigment oder einem Gemisch aus zwei oder mehr magnetischen Pigmenten, beispielsweise in Abmischung mit einem oder mehreren Lösemitteln und gegebenenfalls zusammen mit Füllstoffen, Dispergierhilfsmitteln, weiteren Bindemitteln und weiteren Zusatzstoffe wie Gleitmitteln, Ruß oder nichtmagnetischen anorganischen oder organischen Pigmenten zusammen dispergiert werden. In einer bevorzugten Ausführungsform werden die Hauptkomponenten in der Magnetdispersion, also insbesondere die Pigmente und das Bindemittel zunächst unter Zusatz von wenig Lösungsmittel zur einer teigartigen Masse vermengt und anschließend innig miteinander, z. B. durch Kneten, vermischt und erst anschließend dispergiert.

Als Gleitmittel können beispielsweise Carbonsäuren mit etwa 10 bis etwa 20 C-Atomen, insbesondere Stearinsäure oder Palmitinsäure oder Derivate von Carbonsäuren wie deren Salze, Ester oder Amide, oder Gemische aus zwei oder mehr davon, eingesetzt werden.

Als nichtmagnetische anorganische Zusatzstoffe kommen beispielsweise Aluminiumoxid, Siliziumdioxid, Titandioxid oder Zirkondioxid, als nichtmagnetische organische Pigmente beispielsweise Polyethylen oder Polypropylen in Betracht.

Die erfindungsgemäßen Bindemittel können im Rahmen ihrer Verwendung in magnetische Aufzeichnungsmedien beispielsweise auf übliche starre oder flexible Trägermaterialien aufgetragen werden. Als Trägermaterialien eigentlich beispielsweise Folien aus linearen Polyestern wie Polyethylenterephthalat, Polyethylennaphthalat, die im allgemeinen Stärken von etwa 4 bis etwa 200 Mikrometer, insbesondere etwa 5 bis etwa 36 Mikrometer aufweisen.

Ebenfalls Gegenstand der Erfindung ist die Verwendung eines erfindungsgemäßen Bindemittels oder eines erfindungsgemäß hergestellten Bindemittels zur Herstellung magnetischer Aufzeichnungsmedien sowie ein derartiges Aufzeichnungsmedium an sich. Als Aufzeichnungsmedien sind insbesondere zu nennen:

Videokassetten, sowohl für den Profi- und Endverbraucherbereich; Audiokassetten, sowohl für den Profi- und Endverbraucherbereich, z. B. Digital Audio Tape; Disketten; Floppy Disk; ZIP-Disk; Magnetstreifen.

Die Erfindung wird nachfolgend durch Beispiele näher erläutert.

### BEISPIELE:

### 1) Synthese der Bindemittel

### a) Hartsegment (Polydiisocyanat)

Azin und Diisocyanat werden im Verhältnis 0,6 zu 1,0 eingewogen und in der Schmelze bei 165 °C 175 °C umgesetzt, bis der theoretische NCO-Gehalt erreicht ist. Der Mechanismus der Umsetzung ist eine criss-cross-Cycloaddition.

Die es wurden 3 verschiedene Hartsegmente hergestellt, die in der folgenden Tabelle 1 beschrieben sind. Als Azin wurde stets p-Methoxybenzaldazin verwendet. Die Molekulargewichte würden über GPC in THF mit Polystyrol-Standards gemessen und die Glasübergangstemperaturen wurden über DSC mit einer Aufheizrate von 20 K/min gemessen.

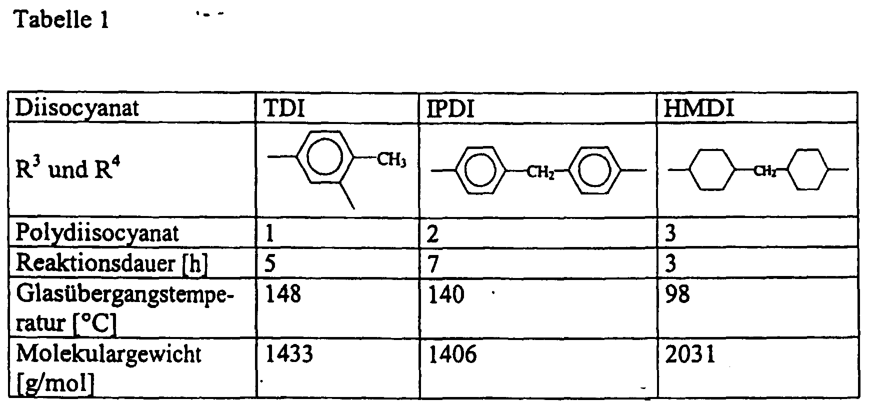

Die Cycloadditionsprodukte sind spröde, glasklare und leicht gelbstichige Harze.

### Bindemittel

Polydiisocyanat und Polyesterpolyol wurden äquimolar eingewogen und in Tetrahydrofuran 4 Stunden auf 65 °C erhitzt. Als Katalysator wurde Dibutylzinndilaurat eingesetzt.

**Tabelle 2**

| Chemischer Aufbau und physikalische Daten der Bindemittel 1 bis 9 | | | | |
|---|---|---|---|---|
| Polydiisocyanat (Hartsegment) | Weichsegment | | | |
| | E 1010 M_{w} = 1000 g/mol | VP 9184 M_{w} = 1000 g/mol | AC 800 M_{w} = 800 g/mol | Poly THF M_{w} = 1000 g/mol |
| 2 | | | | Bindemittel 1 |
| Glasübergangs-temp. [°C] | | | | 43 |
| Molekularge-wicht [g/mol] | | | | 15.000 |
| Pendelhärte | | | | 70 |
| 1 | Bindemittel 2 | Bindemittel 3 | Bindemittel 4 | Bindemittel 5 |
| Glasübergangs-temp. [°C] | 26 | 43 | 87 | 26 |
| Molekularge-wicht [g/mol] | 24.000 | 22.000 | 18.000 | 21.000 |
| Pendelhärte | 63 | 169 | 234 | 27 |
| 3 | Bindemittel 6 | Bindemittel 7 | Bindemittel 8 | Bindemittel 9 |
| Glasübergangs-temp. [°C] | 27 | 47 | 79 | 40 |
| Molekularge-wicht [g/mol] | 33.000 | 39.000 | 20.000 | 24.000 |
| Pendelhärte [s] nach DIN 53157 | 74 | 149 | 212 | 47 |

### 2) Dispersionen

Mit den Bindemitteln 6 und 7 wurden Dispergierversuche durchgeführt. Dazu wurden in einer dem Fachmann bekannten Weise zunächst ein Magnetpigment DOWA HW 31 mit einem Bindemittel (siehe Tabelle 3) und als Dispergierhilfsmittel Stearinsäure vordispergiert. Der Glanz als Qualitätsmerkmal der Dispersionen dieser ersten Phase wurde gemessen und die Dispergierung anschließend in Phase 2 durch Zugabe des Bindemittels 6 beziehungsweise 7 komplettiert.

**Tabelle 3**

| Glanzwerte der mit den Bindemitteln 6 und 7 erhaltenen Dispersionen | | |
|---|---|---|
| Phase 1 | Phase 2 Glanz (Phase 1/Phase 2) | |
| Bindemittel | Bindemittel 6 | Bindemittel 7 |
| CA 151 HT (Fa. Morton) | 130/144 | 130/145 |
| Bindemittel auf Acrylatbasis | 120/126 | 120/129 |

### 3) Vergleichsbeispiel

Wird anstatt eines erfindungsgemäßen Bindemittels ein konventionelles Bindemittel ohne Ankergruppen eingesetzt, so erniedrigt sich der Glanz der Phase 2 im Vergleich zu Phase 1. Das bedeutet, daß die Qualität der Dispersion verringert wird. Zur Untersuchung dieses Sachverhalts wurden in einer dem Fachmann bekannten Weise zunächst das Magnetpigment DOWA HW 31 sowie das Bindemittel CA 151 HT (Fa. Morton) und das Dispergierhilfsmittel Stearinsäure vordispergiert. Der Glanz als Qualitätsmerkmal der Dispersion in dieser Phase 1 wurde gemessen, und die Dispergierung anschließend in Phase 2 durch Zugabe eines Bindemittels auf Polyurethanbasis ohne Ankergruppen komplettiert.

| Phase 1 | Glanz (Phase 1/Phase 2) |
|---|---|
| Bindemittel | Bindemittel auf PU-Basis ohne Ankergruppen |
| CA 151 HT (Fa. Morton) | 105/88 |

## Patentansprüche

1. Bindemittelzusammensetzung, mindestens enthaltend einen anorganischen Füllstoff und ein thermoplastisches Blockcopolyurethan oder ein Gemisch aus zwei oder mehr thermoplastischen Blockcopolyurethanen mit jeweils mindestens einem Weichsegment (A) und mindestens einem Hartsegment (B), wobei in mindestens einem Hartsegment (B) ein Strukturelement gemäß der allgemeinen Formel I 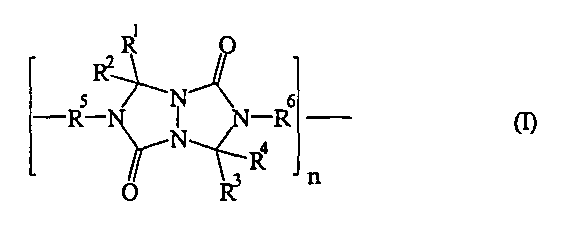 enthalten ist, worin R¹ und R³ für gleiche oder unterschiedliche substituierte oder unsubstituierte aromatische oder heteroaromatische Reste mit 4 bis 40 C-Atomen und R² und R⁴ für Wasserstoff stehen oder R¹, R², R³ und R⁴ für im wesentlichen vollständig fluorierte Alkylgruppen mit 1 bis 10 C-Atomen stehen, R⁵ und R⁶ für gleiche oder unterschiedliche, substituierte oder unsubstituierte, lineare oder verzweigte aliphatische oder gegebenenfalls substituierte cycloaliphatische oder gegebenenfalls substituierte aromatische Reste mit 4 bis 40 C-Atomen und n für eine Zahl von 1 bis 100 steht.

2. Bindemittelzusammensetzung nach Anspruch 1, dadurch gekennzeichnet, daß R¹ und R³ für Methoxybenzyl oder Trimethoxybenzyl und R² und R⁴ für Wasserstoff stehen.

3. Bindemittelzusammensetzung nach Anspruch 1 oder 2, dadurch gekennzeichnet, daß R⁵ und R⁶ für gegebenenfalls substituierte gleiche oder unterschiedliche lineare oder verzweigte aliphatische Reste mit 4 bis 10 C-Atomen oder gegebenenfalls substituierte aromatische Reste mit 6 bis 18 C-Atomen stehen.

4. Bindemittelzusammensetzung nach einem der Ansprüche 1 bis 3, dadurch gekennzeichnet, daß als anorganischer Füllstoff ein magnetisches oder magnetisierbares Pigment enthalten ist.

5. Bindemittelzusammensetzung nach einem der Ansprüche 1 bis 4, dadurch gekennzeichnet, daß sie außer dem thermoplastischen Blockcopolyurethan oder dem Gemisch aus zwei oder mehr thermoplastischen Blockcopolyurethanen noch mindestens ein weiteres Polymeres enthält.

6. Bindemittelzusammensetzung nach Anspruch 5, dadurch gekennzeichnet, daß sie als mindestens ein weiteres Polymeres ein Polymeres aus der Gruppe enthaltend Polyacrylate, Polyesterpolyurethane, Poly(meth)acrylaturethane, Polymethacrylate, Polyacrylamide, Polymere oder Copolymere aus Vinylmonomeren, wie Styrol, Vinylchlorid, Vinylacetat, Vinylpropionat, Bindemittel auf Basis von Vinylformalen, cellulosehaltige Polymere, Celluloseester, Cellulosenitrate, Celluloseacetate, Celluloseacetopropionat oder Celluloseacetobutyrat, Phenoxyharze oder Epoxyharze oder Gemische aus zwei oder mehr davon enthält.

7. Bindemittelzusammensetzung nach einem der Ansprüche 1 bis 6, dadurch gekennzeichnet, daß sie das thermoplastische Blockcopolymere oder das Gemisch aus zwei oder mehr thermoplastischen Blockcopolymeren mit einem Strukturelement gemäß Formel I im Hartsegment (B) in einer Menge bis 100 Gew.-%, bezogen auf die gesamte Bindemittelzusammensetzung, enthält.

8. Bindemittelzusammensetzung nach einem der Ansprüche 1 bis 7, enthaltend einen anorganischen Füllstoff und ein thermoplastisches Polyurethan mit mindestens einem Weichsegment (A) und einem Hartsegment (B), wobei das thermoplastische Polyurethan durch Umsetzung von mindestens zwei Komponenten L und M, bei der
a) als Komponente L eine Verbindung der allgemeinen Formel II 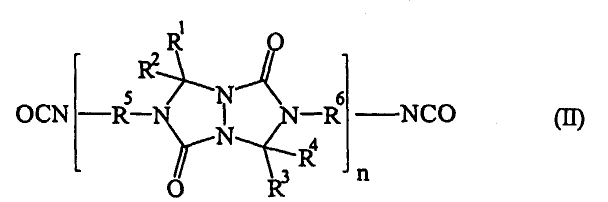 worin R¹, R², R³, R⁴, R⁵, R⁶ und n die bereits oben angegebene Bedeutung haben und
b) als Komponente M eine mindestens difunktionelle, gegenüber Isocyanatgruppen unter Ausbildung einer kovalenten Bindung reaktionsfähige Verbindung mit einem Molekulargewicht von mindestens 300
eingesetzt wird, erhältlich ist.

9. Bindemittelzusammensetzung nach Anspruch 8, dadurch gekennzeichnet, daß als Komponente Y ein gegenüber Isocyanatgruppen mindestens difunktioneller Polyester, Polyether, ein Polyacetal, ein Polycarbonat, ein Polyacrylat, ein Polymethacrylat oder ein Polyvinylpolymeres oder ein Gemisch aus zwei oder mehr davon, eingesetzt wird.

10. Verfahren zur Herstellung einer Bindemittelzusammensetzung nach einem der Ansprüche 1 bis 9, bei dem ein anorganischer Füllstoff und ein thermoplastisches Blockcopolyurethan oder ein Gemisch aus zwei oder mehr thermoplastischen Blockcopolyurethanen mit mindestens einem Weichsegment (A) und mindestens einem Hartsegment (B), wobei mindestens ein Hartsegment ein Strukturelement gemäß der allgemeinen Formel I 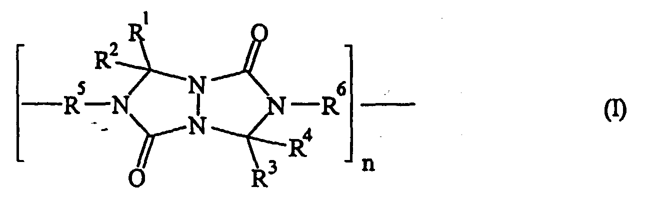 aufweist, worin R¹ und R³ für gleiche oder unterschiedliche, substituierte oder unsubstituierte aromatische oder heteroaromatische Reste mit 4 bis 40 C-Atomen und R² und R⁴ für Wasserstoff stehen oder R¹, R², R³ und R⁴ für im wesentlichen vollständig fluorierte Alkylgruppen mit 1 bis 10 C-Atomen stehen, R⁵ und R⁶ für gleiche oder unterschiedliche, substituierte oder unsubstituierte, lineare oder verzweigte aliphatische oder gegebenenfalls substituierte cycloaliphatische oder gegebenenfalls substituierte aromatische Reste mit 4 bis 40 C-Atomen und n für eine Zahl von 1 bis 100 steht, miteinander vermischt werden.

11. Verwendung einer Bindemittelzusammensetzung nach einem der Ansprüche 1 bis 10 zur Herstellung von magnetischen Aufzeichnungsmedien.
